# EUROPÄISCHE PATENTSCHRIFT

(11) **EP 3 458 739 B1**
(45) Veröffentlichungstag und Bekanntmachung des Hinweises auf die Patenterteilung: **01.04.2020**
(21) Anmeldenummer: 17721536.5
(22) Anmeldetag: 18.04.2017
(51) Int. Cl.: F16F 9/48, F16F 9/32

(54) **SCHWINGUNGSDÄMPFER MIT HUBABHÄNGIGER DÄMPFKRAFT**
VIBRATION DAMPER HAVING STROKE-DEPENDENT DAMPING FORCE
AMORTISSEUR DE VIBRATIONS DONT LA FORCE D'AMORTISSEMENT EST FONCTION DE LA COURSE

(30) Priorität: 19.05.2016 DE 102016208632
(43) Veröffentlichungstag der Anmeldung: 27.03.2019
(73) Patentinhaber: ZF Friedrichshafen AG, 88046 Friedrichshafen (DE)
(72) Erfinder: PATZENHAUER, Andre, 53783 Eitorf (DE); WEBER, Johannes, 53809 Ruppichteroth (DE); WAGENKNECHT, Frank, 53783 Eitorf (DE); HILDEBRANDT, Bernd, 53783 Eitorf (DE); WOLFF, Michael, 53721 Siegburg (DE)
(86) Internationale Anmeldenummer: PCT/EP2017/059082
(87) Internationale Veröffentlichungsnummer: WO 2017/198403

(56) Entgegenhaltungen:
- CN-U- 203 906 638
- FR-A- 1 057 048
- FR-A- 1 090 999
- FR-A- 1 250 263
- FR-E- 30 917
- US-A- 4 337 849

## Beschreibung

Die Erfindung betrifft einen Schwingungsdämpfer mit hublagenabhängiger Dämpfkraft gemäß dem Oberbegriff von Patentanspruch 1.

Aus der DE 196 16 055 C1 ist ein Schwingungsdämpfer mit hublagenabhängiger Dämpfkraft bekannt, der zwei Dämpfkolben aufweist, deren axialer Abstand zu einer Bypassnut in einem Arbeitszylinder abgestimmt ist. Damit kann erreicht werden, dass z.B. beide Dämpfkolben über die Bypassnut umströmt werden, ohne dass eine nennenswerte Dämpfkraft erzeugt wird. Bei einem einzigen Dämpfkolben außerhalb der Bypassnut wird eine mittlere Dämpfkraft und bei einer Hublage, bei der sich beide Dämpfkolben außerhalb der Bypassnut befinden wird die größte Dämpfkraft erreicht.

Diese einfache Konstruktion bietet sich bei einem sogenannten Einrohr-Schwingungsdämpfer an, bei dem sowohl in Ein- wie auch in Ausfahrrichtung die gesamte Dämpfkraft von mindestens einem Dämpfkolben erzeugt wird. Es gibt aber auch Anwendungen, bei denen der Einrohr-Schwingungsdämpfer eher nicht eingesetzt wird. Manchmal ist es ein Nachteil des Einrohr-Schwingungsdämpfers, dass der druckvorgespannte Ausgleichsraum temperaturabhängig eine Ausfahrkraft auf die Kolbenstange ausübt. Bei einem Zweirohr-Schwingungsdämpfer tritt diese Eigenschaft nicht auf, zumindest kann man konstruktiv dafür sorgen.

Bei einem Zweirohr-Schwingungsdämpfer wird die Minimaldämpfkraft in Einfahrrichtung von einem Bodenventil bestimmt, das einen kolbenstangenseitigen Arbeitsraum von einem Ausgleichsraum trennt. Über das Bodenventil fließt prinzipbedingt das von der einfahrenden Kolbenstange verdrängte Dämpfmediumvolumen. Wenn man die Dämpfkrafteinstellung am Bodenventil im Verhältnis zur Dämpfkraft am Kolben zu stark absenkt, dann würde die einfahrende Kolbenstange das Dämpfmedium über das Bodenventil in den Ausgleichsraum verdrängen und im kolbenstangenseitigen Arbeitsraum würde ein Unterdruck entstehen, da das Kolbenventil bezogen auf den kolbenstangenfernen Arbeitsraum dem Bodenventil hydraulisch parallelgeschaltet ist. Folglich ist mit einer Absenkung der Dämpfkraft am Bodenventil auch immer eine Absenkung der maximalen Dämpfkraft am Kolbenventil verbunden. Versuche haben auch gezeigt, dass ein Arbeitszylinder mit einem großen Durchmesser in Verbindung mit einer Kolbenstange, die einen kleineren Durchmesser als üblich aufweist, zu keiner signifikanten Verbesserung der Dämpfventilauslegung führt. Dieser Effekt tritt auch bei einem Schwingungsdämpfer gemäß der DE 36 11 288 A1 auf. Auch bei einer Bypassverbindung zwischen den beiden Arbeitsräumen muss das von der Kolbenstange verdrängte Dämpfmedium über das Bodenventil abfließen. Man überbrückt ausschließlich das Dämpfventil im Kolben.

Die US 4 337 849 A offenbart einen Schwingungsdämpfer mit hublagenabhängiger Dämpfkraft. Zwischen einem kolbenstangenseitigen Arbeitsraum und einem kolbenstangenfernen Arbeitsraum besteht eine druckabhängig Verbindung über Dämpfventile in einem Kolben an der Kolbenstange. Zwischen dem kolbenstangenfernen Arbeitsraum und einem das Volumen der ein- und ausfahrenden Kolbenstange kompensierenden Ausgleichsraum besteht über eine Anzahl von Radialöffnungen im Zylinder eine Anschlussverbindung.

Zwischen dem kolbenstangenseitigen Arbeitsraum einem ringförmigen Raum ist eine Trennwand angeordnet, die von der Kolbenstange durchdrungen wird. In der Trennwand ist mindestens ein Überdruckventil angeordnet, ausgehend von dem kolbenstangenseitigen Arbeitsraum in den ringförmigen Raum öffnet. Der ringförmige Raum verfügt über einen Radialkanal zum Ausgleichsraum.

Die hubabhängige Dämpfung des Schwingungsdämpfers wird über das Zusammenwirken des Kolbens an der Kolbenstange und den Radialöffnungen im Zyinder erreicht. Die Überdruckventile in der Trennwand arbeiten nur dann, wenn sich der Kolben im Durchtrittsbereich der Radialöffnungen befindet. Die axiale Erstreckung des Ringraums wirkt sich nicht auf das Dämpfkraftverhalten des Schwingungsdämpfers aus.

Die Aufgabe der vorliegenden Erfindung besteht darin, einen Schwingungsdämpfer in Zweirohrbauweise zu realisieren, der hubabhängig zumindest in Einfahrrichtung eine besonders geringe Dämpfkraftcharakteristik aufweist.

Die Aufgabe wird durch die Merkmale des Patentanspruchs 1 gelöst

Über die Anschlussverbindung wird die Drosselverbindung über das Bodenventil überbrückt. Das heißt, in dem Hubbereich der Kolbenstange und des Kolbens in dem keine oder nur eine geringe Dämpfkraft gewünscht wird, strömt das Dämpfmedium aus dem kolbenstangenfernen Arbeitsraum über die parallel zum Bodenventil wirksame Anschlussverbindung in den Ausgleichsraum. Damit hat die Dämpfventilcharakteristik des Bodenventils und/oder der Kolbenstangendurchmesser keinen Einfluss auf die minimale Dämpfkraft des Schwingungsdämpfers.

Der Abstand zwischen der Trennwand und einer Kolbenstangenführung bestimmt den maximalen Hubweg des Schwingungsdämpfers bei minimaler Dämpfkraft. Die Trennwand kann zum Beispiel über eine radiale Formschlussverbindung zwischen dem Arbeitszylinder und der Trennwand hergestellt werden. Alternativ kann der Arbeitszylinder auch zweigeteilt sein, so dass die Trennwand zwischen zwei Stirnflächen der Arbeitszylinderbauabschnitte verspannt ist.

In weiterer vorteilhafter Ausgestaltung weist die Kolbenstange auf einem Längenabschnitt eine Durchmesserreduzierung auf, die ein Bestandteil des Schaltventils bildet. Grundsätzlich könnte man eine aufwändige Ventileinrichtung vorsehen, z.B. ein Sitzventil, das von der Trennwand gebildet wird, doch wären diese Ventilteile permanent im geöffneten Zustand einer Anregung ausgesetzt. Über die Ausgestaltung in Form der Durchmesserreduzierung und der starren Trennwand benötigt das Schaltventil keine weiteren bewegbaren Ventilkomponenten, so dass einerseits keine Geräusche zu erwarten sind und andererseits ein extrem einfacher Aufbau erreicht werden kann. Die Durchmesserreduzierung kann beispielsweise durch eine partielle Abflachung aber auch durch eine vollständige Durchmesserreduzierung erreicht werden.

Alternativ besteht die Möglichkeit, dass die Kolbenstange einen Axialkanal in Verbindung mit einem Radialkanal aufweist, wobei dieses Kanalsystem ein Bestandteil des Schaltventils bildet. Konkret wirkt der Radialkanal mit der Trennwand zusammen und bildet eine einfache Form eines Schieberventils.

Gemäß einem vorteilhaften Unteranspruch wird der Bypassverbindungsbereich von mindestens einer Nut in einer Innenwandung des Arbeitszylinders ausgeführt. Diese Form einer Bypassverbindung lässt sich sehr leicht ausführen, wobei der Bypassverbindungsbereich durchaus von mehreren Nuten in unterschiedlicher Länge gebildet werden kann.

Unabhängig von der Bauform des Schaltventils ist es vorteilhaft, wenn die Anschlussöffnung mit einem in die Richtung des Ausgleichsraums sich öffnenden Rück
schlagventil bestückt ist. Damit lässt sich der Schwingungsdämpfer z.B. leichter in einer horizontalen Einbaulage einsetzen, ohne dass der Arbeitsraum bei einer Ausfahrbewegung Gas zieht. Des Weiteren wird das Dämpfmedium bei einer Ausfahrbewegung stets über das sich öffnende Bodenventil in den kolbenstangenfernen Arbeitsraum einströmen und damit liegt stets eine definierte Strömungsbewegung des Dämpfmediums im Schwingungsdämpfer vor.

Anhand der folgenden Figurenbeschreibung soll die Erfindung näher erläutert werden.

Es zeigt:
- Figuren 1 - 3: Schwingungsdämpfer mit einer Trennwand zwischen einem kolbenstangenseitigen und einem kolbenstangenfernen Arbeitsraum

Die folgenden Figuren entsprechen nicht der erfindungsgemäßen Ausgestaltung:
- Figur 4: Schwingungsdämpfer mit zwei Bypassverbindungsbereichen
- Figuren 5 - 8: Schwingungsdämpfer mit einem Kolben der zwei beabstandete Kolbenringe aufweist.

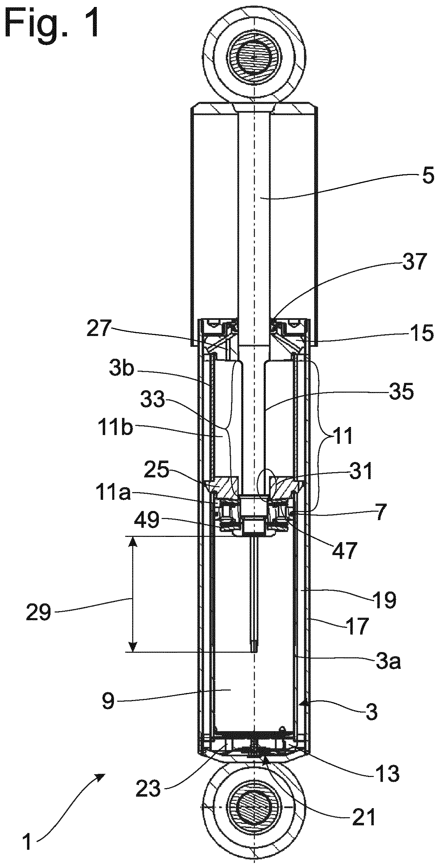

Die Figuren 1 bis 3 zeigen eine Variante eines Schwingungsdämpfers mit hublagenabhängiger Dämpfkraft. In einem Arbeitszylinder 3 ist eine Kolbenstange 5 mit einem daran befestigten Kolben 7 axial beweglich geführt. Der Kolben 7 unterteilt den Arbeitszylinder 3 in einen kolbenstangenfernen Arbeitsraum 9 und einen kolbenstangenseitigen Arbeitsraum 11. Der kolbenstangenferne Arbeitsraum 9 erstreckt sich vom Kolben 7 bis zu einem Boden 13, das endseitig am Arbeitszylinder 3 befestigt ist und diesen begrenzt. Der kolbenstangenseitige Arbeitsraum 11 wiederum erstreckt sich von dem Kolben 7 bis zu einer Kolbenstangenführung 15, die sich an dem anderen Ende des Arbeitszylinders 3 befindet und verschließt. Ein äußerer Behälter 17 hüllt den Arbeitszylinder 3 vollständig ein und bildet mit einer Außenwandung des Arbeitszylinders 3 einen Ringraum 19. Der Boden verfügt über ein Dämpfventil 21, das in Strömungsrichtung vom kolbenstangenfernen Arbeitsraum 9 in den Ringraum 19 öffnet und über ein Rückschlagventil 23 das in Strömungsrichtung vom Ringraum 19 in den kolbenstangenseitigen Arbeitsraum 9 ebenfalls öffnet.

In diesem Ausführungsbeispiel ist der Arbeitszylinder 3 zweigeteilt. Ein erster Teilabschnitt erstreckt sich vom Boden 13 bis zu einer Trennwand 25 und ein zweiter Abschnitt 3b von der Trennwand 25 bis zur Kolbenstangenführung 15. Ein erster Teilraum 11a im kolbenstangenseitigen Arbeitsraum 11 erstreckt sich liegt zwischen dem Kolben 7 und der Trennwand 25 und ein zweiter Teilraum 11b zwischen der Trennwand 25 und der Kolbenstangenführung 15. Der zweite Teilraum 11b als Teil des kolbenstangenfernen Arbeitsraums 11 weist eine Anschlussverbindung 27 zu dem Ringraum 19 auf. Der Ringraum hat die Funktion, das von der Kolbenstange 5 durch das Dämpfventil 21 im Boden verdrängte Dämpfmedium in den beiden Arbeitsräumen 9; 11 zu kompensieren, so dass dieser Ringraum 19 als Ausgleichsraum fungiert. Die Anschlussverbindung 27 kann wie gezeigt in der Kolbenstangenführung 15 ausgeführt sein, aber auch in dem zweiten Teilraum 11b zwischen der Trennwand 25 und der Kolbenstangenführung 15 oder auch in der Trennwand 25 selbst ausgeführt sein. Des Weiteren verfügt der Arbeitszylinder 3 über einen Bypassverbindungsbereich 29, der in Abhängigkeit der gewünschten Dämpfkraftcharakteristik zwischen dem Boden 13 und der Trennwand 25 positioniert ist. Die axiale Position des Bypassverbindungsbereichs 29 bestimmt den Übergang von einer weichen Dämpfkrafteinstellung hin zu einer härteren Dämpfkrafteinstellung.

Der Bypassverbindungsbereich 29 wird von mindestens einer axial verlaufenden Nut gebildet, deren Querschnitt derart bemessen ist, dass der Kolben 7 im Wesentlichen drosselfrei umströmt werden kann, wenn sich der Kolben 7 in dem Bypassverbindungsbereich 29 befindet.

In den Figuren 1, 2 und 3 bildet die Kolbenstange 5 zusammen mit der Trennwand 25 ein Schaltventil. In der Ausführung nach Figur 1 weist die Kolbenstange 5 dafür ausgehend vom Kolben 7 einen Längenabschnitt 33 mit einer Durchmesserreduktion auf, die von einer Abflachung 35 gebildet wird. Bei maximaler Ausfahrposition der Kolbenstange erreicht die Durchmesserreduzierung 35 noch nicht eine Kolbenstangendichtung 37, so dass gesichert ist, dass keinesfalls Dämpfmedium über die Durchmesserreduzierung 35 aus dem kolbenstangenseitigen Arbeitsraum 11 austreten kann.

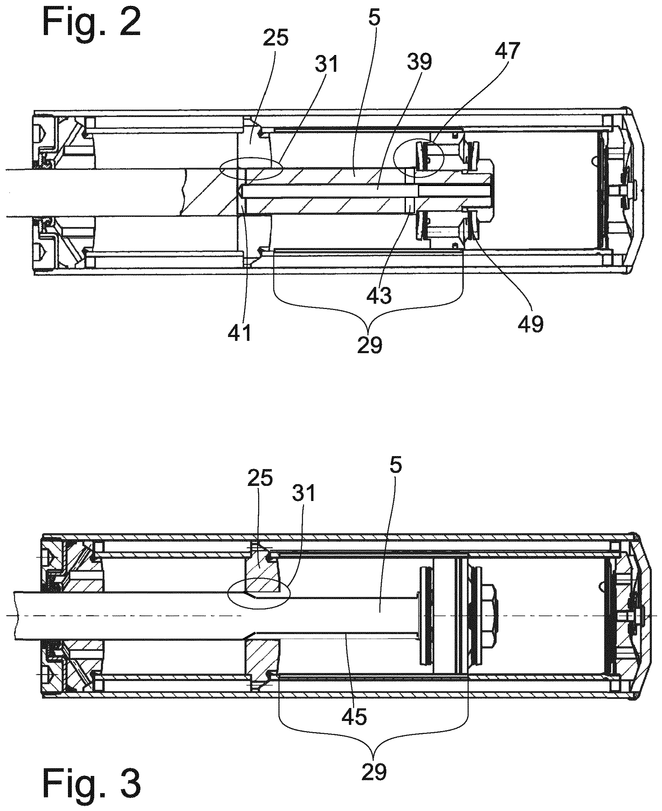

In der Figur 2 kommt für das Schaltventil 31 ein Axialkanal 39 zur Anwendung, der den ersten Teilraum 11a mit dem zweiten Teilraum 11b verbindet. Dazu verfügt die Kolbenstange 5 über mindestens zwei beabstandete Radialkanäle 41; 43, die an den Axialkanal 39 angeschlossen sind. Auch hier ist die Position eines oberen Radialkanals 41 derart gewählt, dass keinesfalls ein Anschluss zwischen dem zweiten Teilraum 11b über die Kolbenstangendichtung 37 hinaus zur Umgebung möglich ist.

In der Figur 3 ist die Kolbenstange 5 voll umfänglich mit einer Durchmesserreduzierung 45 ausgeführt. Bei den drei verschiedenen Bauformen der Durchmesserreduzierung wird stets sichergestellt, dass das Dämpfmedium an der Trennwand 25 vorbei vom ersten Teilraum 11a in den zweiten Teilraum 11b geführt werden kann.

Wenn sich der Kolben 5 in dem Bypassverbindungsbereich 29 befindet, wird bei jeder Kolbenstangeneinfahrbewegung das Volumen der einfahrenden Kolbenstange 5 in den ersten Teilraum 11a und weiter in den zweiten Teilraum 11b verdrängt. Das Dämpfventil 21 als Teil des Bodens zwischen dem kolbenstangenfernen Arbeitsraum 9 und dem Ausgleichsraum 19 sorgt für einen hydraulischen Widerstand, so dass das Dämpfmedium über das drosselarme Schaltventil 31 entlang der Trennwand 25 in den zweiten Teilraum 11b und weiter über die Anschlussverbindung 27 in den Ausgleichsraum 19 abströmt. Folglich liegt nur eine geringe Dämpfkraft vor.

Auch bei einer Kolbenstangenausfahrbewegung liegen ähnliche Strömungsverhältnisse vor. Das vom Kolben 5 verdrängte Dämpfmedium fließt vom ersten Teilraum 11a entlang über das offene Schaltventil 31 der Trennwand in den Teilraum 11b und weiter über die Anschlussverbindung 27 in den Ausgleichsraum 19. Gleichzeitig kann Dämpfmedium aus dem Ausgleichsraum 19 über das geöffnete Rückschlagventil 23 als Teil des Bodens 13 wiederum in den kolbenstangenfernen Arbeitsraum 9 einströmen.

Wenn die Kolbenstange 5 über den Bypassverbindungsbereich 29 hinaus in Richtung des Bodens 13 einfährt, dann ist die Bypassverbindung inaktiv, das heißt, der Schwingungsdämpfer funktioniert dann wie ein gewöhnlicher Schwingungsdämpfer, bei dem das von der Kolbenstange 5 verdrängte Dämpfmedium einerseits über das Dämpfventil 21 in den Ausgleichsraum 19 strömt und andererseits ein Dämpfventil 47 im Kolben für eine Dämpfkraft am kolbenseitigen Dämpfventil sorgt, die von dem Dämpfmedium erzeugt wird, das von dem kolbenstangenfernen Arbeitsraum 9 in den ersten Teilraum 11a und weiter in den zweiten Teilraum 11b einströmt.

Wenn der Kolben 7 z.B. aus einer maximalen Einfahrposition wiederum in Richtung Kolbenstangenführung 15 bzw. Trennwand 25 bewegt wird, dann sorgt er mit seinem Dämpfventil 49 bis zur Erreichung des Bypassverbindungsbereichs 29 für eine erhöhte Dämpfkraft. Bei weiterer Ausfahrbewegung steht wiederum der Kolben 7 in Überdeckung mit dem Bypassverbindungsbereich 29, so dass der Kolben 7 umströmt werden kann und keine oder nur eine geringe Dämpfkraft erzeugt. Die Ausführungen nach den Figuren 2 und 3 arbeiten trotz der unterschiedlichen konstruktiven Ausgestaltung des Schaltventils 31 zwischen dem kolbenstangenfernen Arbeitsraum 9 und dem ersten Teilraum 11a in identischer Art und Weise.

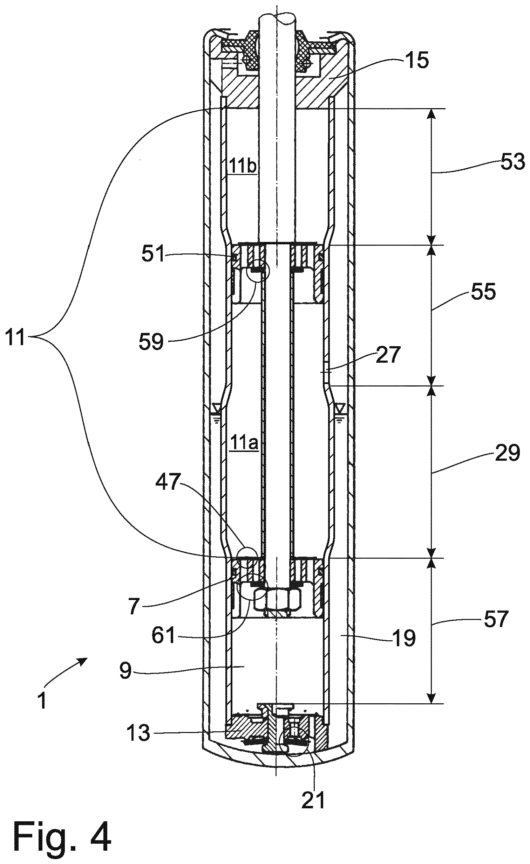

Die Figur 4 zeigt eine Schnittdarstellung durch einen Schwingungsdämpfer 1, bei dem ebenfalls der kolbenstangenseitige Arbeitsraum 11 über die Anschlussverbindung 27 mit dem Ausgleichsraum 19 verbunden ist. An der Kolbenstange 5 ist der Kolben 7 befestigt, der den kolbenstangenfernen Arbeitsraum 9 vom kolbenstangenseitigen Arbeitsraum 11 trennt. Innerhalb des kolbenstangenseitigen Arbeitsraums 11 ist mit axialem Abstand zum ersten Kolben 7 ein zweiter Kolben 51 an der Kolbenstange 5 fixiert. Zwischen der Kolbenstangenführung 15 und dem Boden 13 gibt es zwei axial beabstandete Bypassverbindungsbereiche 29; 53, die durch einen Schaltabschnitt 55 voneinander getrennt sind, wobei der Schaltabschnitt 55 dem Nenndurchmesser des Arbeitszylinders 3 entspricht. Zwischen dem Boden 13 und dem ersten Bypassverbindungsbereich 29 ist ein Längenabschnitt 57 ausgeführt, in dem der Schwingungsdämpfer 1 seine maximale Dämpfkraft erzeugen kann. Auch der Längenabschnitt 57 verfügt über den Nenndurchmesser des Arbeitszylinders 3.

Der Schaltabschnitt 55 weist die Anschlussverbindung 27 zwischen dem kolbenstangenseitigen Arbeitsraum 11, vergleichbar mit dem Teilraum 11a in Ausführung 1 bis 3 und dem Ausgleichsraum auf. Der Abstand zwischen den beiden Kolben 7; 51 ist derart gewählt, dass bei einer Hublage des ersten Kolbens 7 im ersten Bypassverbindungsbereich 29 der zweite Kolben 51 im zweiten Bypassverbindungsbereich 53 positioniert ist. In dieser Hublage bzw. Hubsituation kann das von der Kolbenstange 5 verdrängte Dämpfmedium aus dem kolbenstangenfernen Arbeitsraum 9 über die beiden Bypassverbindungsbereiche 29; 53 vollständig in den kolbenstangenseitigen Arbeitsraum 11 einströmen. Gleichzeitig ist dabei die Anschlussverbindung 27 zwischen dem Teilraum 11 und dem Ausgleichsraum 19 geöffnet, so dass das von der Kolbenstange 5 verdrängte Dämpfmedium nahezu widerstandsfrei in den Ausgleichsraum 19 entweichen kann und nur eine minimale Dämpfkraft auftritt.

Bei einer Kolbenstangenausfahrbewegung ausgehend von einer Kolbenposition innerhalb der Bypassverbindungsbereiche 29; 53 kann ebenfalls das Dämpfmedium aus den Teilräumen 11a; 11b über den Bypassverbindungsbereich 53 in den kolbenstangenfernen Arbeitsraum 9 entweichen und folglich auch nur eine geringe Dämpfkraft erzeugen. Wenn der erste Kolben 7 den Längenabschnitt 57 zwischen dem ersten Bypassverbindungsbereich 29 und dem Boden 13 erreicht hat, ist der Bypassverbindungsbereich 29 geschlossen, das gesamte Dämpfmedium aus dem kolbenstangenfernen Arbeitsraum 9 muss über das Dämpfventil 21 im Boden 13 oder über ein Dämpfventil 47 im Kolben 7 verdrängt werden. Die maximale Einfahrbewegung der Kolbenstange 7 ist dann erreicht, wenn der zweite Kolben 51 die Anschlussverbindung 27 erreicht hat. Unter dem Begriff Kolben ist in dem Fall die Dichtfunktion des Kolbens zu verstehen, das heißt, wenn der Kolben 51 selbstdichtend im Schaltabschnitt 55 anliegt, dann wird die maximale Einfahrposition von der Oberseite des zweiten Kolbens 51 bestimmt. Wird ein separater Kolbenring eingesetzt, dann ist die maximale Einfahrposition erreicht, wenn der Kolbenring die Anschlussverbindung 27 streift. Bei einer Ausfahrbewegung mit geforderter Dämpfkraft befindet sich der zweite Kolben 51 im Schaltabschnitt 27, so dass das Dämpfmedium aus dem zweiten Teilraum 11b durch ein Dämpfventil 59 im zweiten Kolben 51 in Richtung des kolbenstangenfernen Arbeitsraums 9 verdrängt wird. Der erste Kolben 7 könnte auch eine Zugdämpfung erzeugen, jedoch genügt auch ein einfaches Rückschlagventil 61, das eine Anströmung ausgehend vom ersten Teilraum 11a in den kolbenstangenfernen Arbeitsraum 9 freigibt. In der einfachsten Ausführung verfügt jeder Kolben 7; 51 nur über ein einziges Dämpfventil für nur eine Bewegungsrichtung der Kolbenstange. Die Begriffe erster Kolben 7 und zweiter Kolben 51 sind derart zu verstehen, dass die beiden Kolben auch z.B. von einer gemeinsamen Hülse gebildet werden könnten. Wichtig sind die Dichtungsbereiche der beiden Kolben 7; 51, die in diesem Ausführungsbeispiel von den beiden Kolbenringen gebildet werden. Würde man z.B. einen einteiligen Kolben verwenden, könnte dieselbe Funktion erreicht werden.

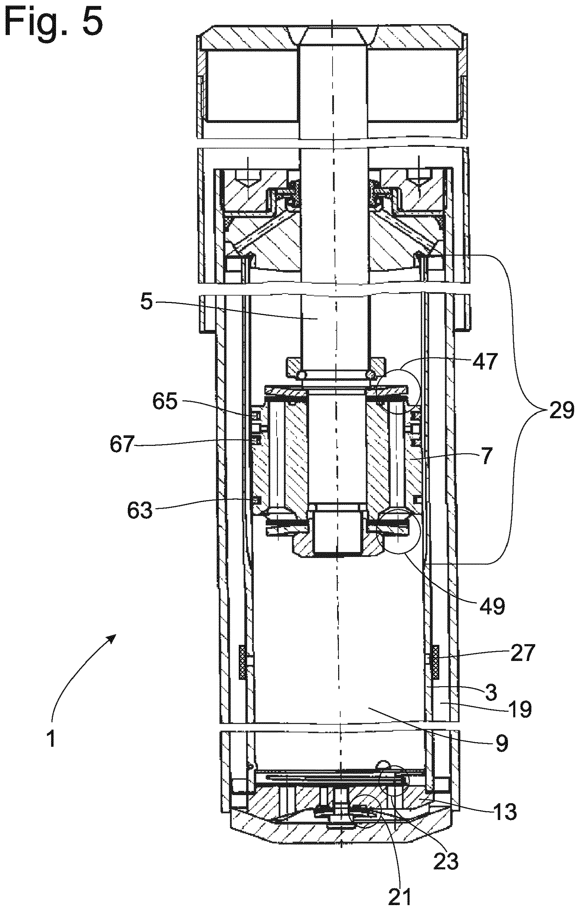

Die Figuren 5 bis 8 beschreiben eine Ausführungsform des Schwingungsdämpfers 1, die in den einzelnen Figuren unterschiedliche Hublagen der Kolbenstange bzw. des Kolbens zeigen. Die Figur 5 beschreibt den Zweirohrschwingungsdämpfer 1 mit dem auf den ersten Blick gewöhnlichen Kolben 7, der die Dämpfventile 47; 49 für die Einfahr- und Ausfahrrichtung der Kolbenstange 5 aufweist. Des Weiteren verfügt der Arbeitszylinder 3 über den Bypassverbindungsbereich 29, der von mindestens einer Axialnut gebildet wird. Der Kolben 7 verfügt in dieser Ausführungsform über mindestens zwei axial beabstandete Kolbenringe 63; 65.

Im Arbeitszylinder 3 im Bereich des kolbenstangenfernen Arbeitsraums 9 ist die mindestens eine Anschlussverbindung 27 zwischen dem kolbenstangenfernen Arbeitsraum 9 und dem Ausgleichsraum 19 ausgeführt. Wie man aus der Figur 1 entnehmen kann, befindet sich der Kolben 7 mit beiden Kolbenringen 61; 63 innerhalb des Bypassverbindungsbereichs 29, so kann das Dämpfmedium wie durch die Pfeile dargestellt, den Kolben 7 vollständig umströmen, so dass in Zugrichtung, das heißt in Ausfahrrichtung der Kolbenstange 5 keine nennenswerte Dämpfkraft erzeugt werden kann. Bei einer Einfahrbewegung innerhalb dieses Hubbereichs kann das von der Kolbenstange 5 verdrängte Dämpfmedium über die Anschlussverbindung 27 vom kolbenstangenfernen Arbeitsraum 9 in den Ausgleichsraum entweichen, ohne dass das Dämpfungsventil 21 im Boden 13 durchströmt werden muss.

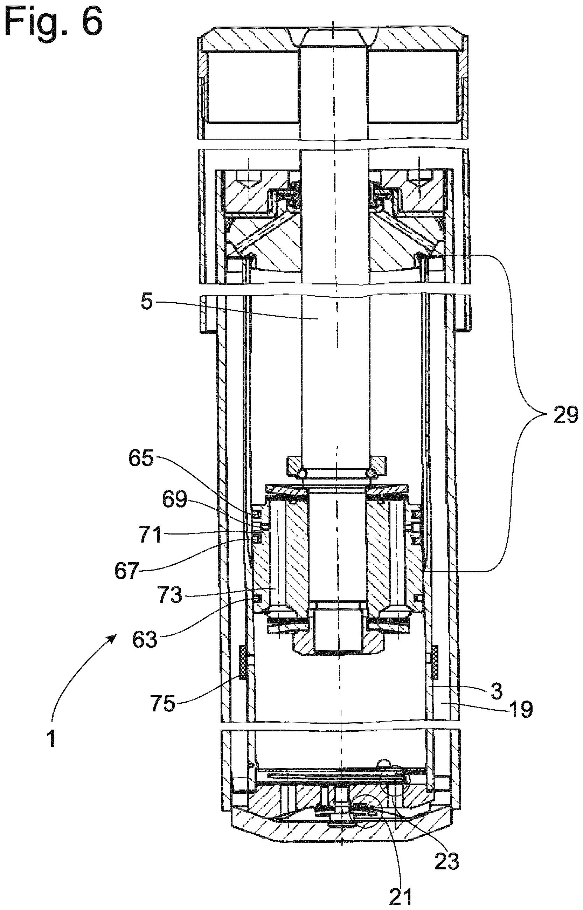

In der Figur 6 befindet sich der Kolben 7 mit seinem ersten Kolbenring 63 bereits außerhalb des Bypassverbindungsbereichs 29, das heißt in dem Längenabschnitt des Arbeitszylinders 3, bei dem der Kolbenring 63 dichtend an der Innenwandung anliegt. Das Dämpfmedium kann weiterhin über die geöffnete Anschlussverbindung 27 aus dem Arbeitsraum 9 entweichen. Das für die Dämpfung in Einfahrrichtung vorgesehene Dämpfventil 21 bleibt jedoch geschlossen, weil zwischen dem zweiten Kolbenring und einem dritten Kolbenring 67 ein Drosselkanal 69 ausgeführt ist, der in einem Mantelflächenbereich 71 zwischen dem zweiten und dem dritten Kolbenring 65; 67 mündet und damit hubabhängig den kolbenstangenfernen Arbeitsraum 9 mit dem Bypassverbindungsbereich 29 verbindet. Aus dieser Darstellung geht zusätzlich hervor, dass der Drosselkanal 69 an einen Ventilkanal 73 des Dämpfventils 47 für die Einfahrrichtung angeschlossen ist, so dass nur ein relativ kurzer zusätzlicher Radialkanal notwendig ist.

Der Drosselkanal 69 ist derart ausgelegt, dass er eine zumindest geringfügige Dämpfkraft ausübt, so dass ausgehend von der Position gemäß Darstellung nach Figur 5 und der vorliegenden Darstellung in der Figur 6, ein Dämpfkraftanstieg bei vergleichbaren Belastungsparametern vorliegt.

In der Figur 6 ist ebenso wie in der Figur 5 ein Rückschlagventil 75 dargestellt, das beispielhaft von einer Schlauchmembran gebildet wird, die auf dem Arbeitszylinder 3 aufgeklemmt ist. Dieses Rückschlagventil 75 öffnet bei einer Anströmung ausgehend vom kolbenstangenfernen Arbeitsraum 9 in den Ausgleichsraum 19. Das Rückschlagventil 75 ist nicht zwingend erforderlich, sorgt jedoch dafür, dass die Dämpfventile 47; 49; 21; 23 innerhalb des Schwingungsdämpfers stets definiert durchströmt werden.

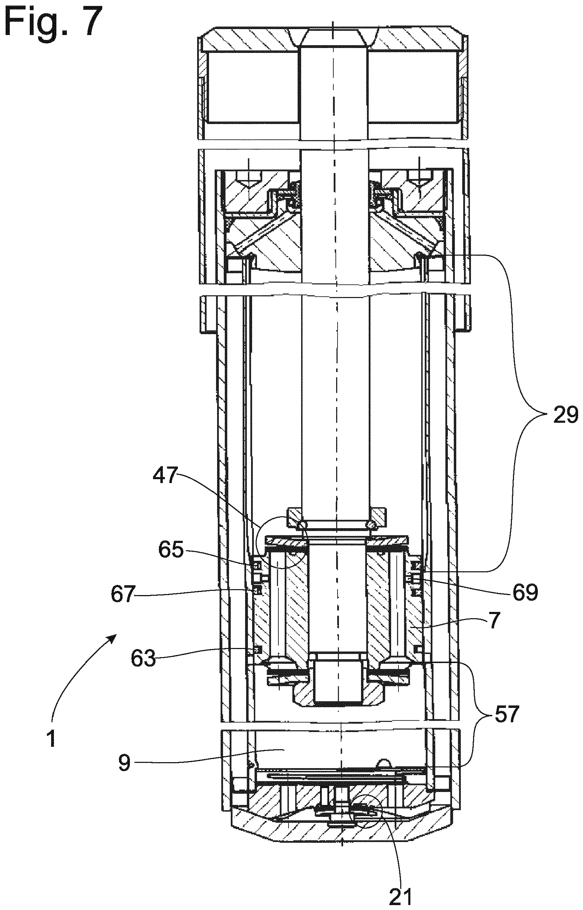

In der Darstellung gemäß Figur 7 befinden sich alle drei Kolbenringe 63; 65; 67 außerhalb des Bypassverbindungsbereichs 29. Bei einer weiteren Einfahrbewegung der Kolbenstange 5 muss das gesamte aus dem kolbenstangenfernen Arbeitsraum 9 verdrängte Dämpfmedium entweder über das Dämpfventil 21 oder über das Dämpfventil 47 im Kolben 7 verdrängt werden. Folglich liegt die höchste Dämpfkrafteinstellung vor. Der Drosselkanal 69 ist nicht wirksam, da der zweite Kolbenring 65 den Abfluss aus dem Drosselkanal 69 in den kolbenstangenfernen Arbeitsraum 11 verhindert.

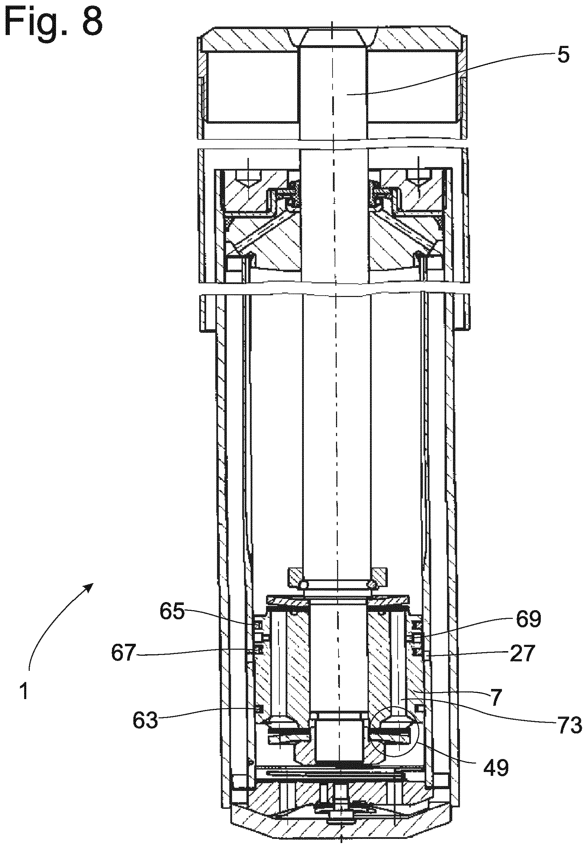

Die Figur 8 zeigt die Kolbenstange 5 zusammen mit dem Kolben 7 in der maximalen Einfahrposition. Bei einer Ausfahrbewegung der Kolbenstange 5 wird wiederum die höchste Dämpfkraft erzielt, da das aus dem kolbenstangenseitigen Arbeitsraum 11 verdrängte Dämpfmedium vollständig durch das Dämpfventil 49 für die Ausfahrrichtung verdrängt wird, da der zweite Kolbenring 65 den Durchtritt in Richtung der Anschlussverbindung 27 blockiert. Erst wenn der Drosselkanal 69 wieder den Bypassverbindungsbereich 29 erreicht hat, kann Dämpfmedium in den Ventilkanal 73 für das Dämpfventil der Zugrichtung eindringen. Der dritte Kolbenring 67 verhindert jedoch das vollständige Umströmen des Kolbens 7, so dass weiterhin eine höhere Dämpfkraft vorliegt. Erst wenn auch der dritte Kolbenring 67 den Bypassverbindungsbereich 29 erreicht hat, kann in Verbindung mit einer mittleren Dämpfkraft Dämpfmedium aus dem kolbenstangenseitigen Arbeitsraum 11 über die Anschlussverbindung 27 in den Ausgleichsraum 19 abfließen.

Wenn der erste Kolbenring 63 ebenfalls den Bypassverbindungsbereich 29 erreicht hat, wird auch in Ausfahrrichtung nur noch die minimalste Dämpfkrafteinstellung erreicht.

**Bezugszeichen**

| | | | |
|---|---|---|---|
| 1 | Schwingungsdämpfer | 55 | Schaltabschnitt |
| 3 | Arbeitszylinder | 57 | Längenabschnitt |
| 5 | Kolbenstange | 59 | Dämpfventil |
| 7 | Kolben | 61 | Rückschlagventil |
| 9 | kolbenstangenferner Arbeitsraum | 63 | Kolbenring |
| 11 | kolbenstangenseitiger Arbeitsraum | 65 | Kolbenring |
| 13 | Boden | 67 | Kolbenring |
| 15 | Kolbenstangenführung | 69 | Drosselkanal |
| 17 | Behälter | 71 | Mantelflächenbereich |
| 19 | Ringraum | 73 | Ventilkanal |
| 21 | Dämpfventil | 75 | Rückschlagventil |
| 23 | Rückschlagventil | 3a | erster Teilabschnitt |
| 25 | Trennwand | 3b | zweiter Teilabschnitt |
| 27 | Anschlussverbindung | 11a | erster Teilraum |
| 29 | Bypassverbindungsbereich | 11b | zweiter Teilraum |
| 31 | Schaltventil | | |
| 33 | Längenabschnitt | | |
| 35 | Abflachung | | |
| 37 | Kolbenstangendichtung | | |
| 39 | Axialkanal | | |
| 41 | Radialkanäle | | |
| 43 | Radialkanäle | | |
| 45 | Durchmesserreduzierung | | |
| 47 | Dämpfventil | | |
| 49 | Dämpfventil | | |
| 51 | zweiter Kolben | | |
| 53 | zweiter Bypassverbindungsbereich | | |

## Patentansprüche

1. Schwingungsdämpfer (1) mit hublagenabhängiger Dämpfkraft, umfassend einen Arbeitszylinder (3; 3a; 3b), in dem eine Kolbenstange (5) mit einem Kolben (7) axial beweglich geführt ist, wobei der Kolben (7) mit einem Dämpfventil (47) den Arbeitszylinder (3) in einen kolbenstangenseitigen Arbeitsraum (11) und einen kolbenstangenfernen Arbeitsraum (9) unterteilt, wobei zwischen den beiden Arbeitsräumen (9; 11) mindestens eine Bypassverbindungsbereich (29) besteht, und im Strömungsweg vom kolbenstangenfernen Arbeitsraum (9) zu einem Ausgleichsraum (19) ein Bodenventil (21) angeordnet ist, wobei der kolbenstangenferne Arbeitsraum (9) eine Anschlussverbindung (27) zum Ausgleichsraum (19) aufweist, die in Abhängigkeit der Hublage der Kolbenstange (5) gesteuert wird, wobei der kolbenstangenseitige Arbeitsraum (11) einen ersten kolbenseitigen Teilraum (11a) und einen zweiten führungsseitigen Teilraum (11b) aufweist, wobei zwischen den beiden Teilräumen (11a; 11b) eine Trennwand (25) angeordnet ist, und der zweite Teilraum (11b) die Anschlussverbindung (27) zum Ausgleichsraum (19) aufweist; **dadurch gekennzeichnet, dass** die Kolbenstange (5) mit der Trennwand (25) ein Schaltventil (31) bildet und bei einer Kolbenstangeneinfahrbewegung, wenn sich der Kolben (5) innerhalb des Bypassverbindungsbereichs (29) befindet, das Volumen der einfahrenden Kolbenstange 5 aufgrund des hydraulischen Widerstands des Bodenventils (21) in den ersten Teilraum 11a und über das drosselarme Schaltventil (31) entlang der Trennwand 25 in den zweiten Teilraum (11b) verdrängt wird und weiter über die Anschlussverbindung (27) in den Ausgleichsraum (19) abströmt, und wobei dann, wenn die Kolbenstange (5) über den Bypassverbindungsbereich (29) hinaus in Richtung des Bodens (13) einfährt, das von der Kolbenstange (5) verdrängte Dämpfmedium einerseits über das Bodenventil (21) in den Ausgleichsraum strömt und anderseites das Dämpfventil (47) im Kolben für eine Dämpfkraft sorgt, die von dem Dämpfmedium erzeugt wird, das von dem kolbenstangenfernen Arbeitsraum (9) in den ersten Teilraum (11a) und weiter in den zweiten Teilraum (11b) einströmt.

2. Schwingungsdämpfer nach Anspruch 1, **dadurch gekennzeichnet, dass** die Kolbenstange (5) auf einem Längenabschnitt (33) eine Durchmesserreduzierung (35; 45) aufweist, die ein Bestandteil des Schaltventils (31) bildet.

3. Schwingungsdämpfer nach Anspruch 1, **dadurch gekennzeichnet, dass** die Kolbenstange (5) einen Axialkanal (39) in Verbindung mit einem Radialkanal (41; 43) aufweist, wobei dieses Kanalsystem ein Bestandteil des Schaltventils (31) bildet.

4. Schwingungsdämpfer nach Anspruch 1, **dadurch gekennzeichnet, dass** der Bypassverbindungsbereich (29) von mindestens einer Nut in einer Innenwandung des Arbeitszylinders ausgeführt ist.

5. Schwingungsdämpfer nach Anspruch 1, **dadurch gekennzeichnet, dass** die Anschlussöffnung (27) mit einem in Richtung des Ausgleichsraums (19) öffnenden Rückschlagventils (75) bestückt ist.

## Claims

1. Vibration damper (1) having a stroke position-dependent damping force, comprising a working cylinder (3; 3a; 3b) in which a piston rod (5), with a piston (7), is guided in an axially displaceable manner, wherein the piston (7), with a damping valve (47), subdivides the working cylinder (3) into a piston rod-side working space (11) and a working space (9) remote from the piston rod, wherein there is at least one bypass connection region (29) between the two working spaces (9; 11), and a base valve (21) is arranged in the flow path from the working space (9) remote from the piston rod to a compensation space (19), wherein the working space (9) remote from the piston rod has a connection (27) to the compensation space (19), which is controlled in a manner dependent on the stroke position of the piston rod (5), wherein the piston rod-side working space (11) has a first piston-side sub-space (11a) and a second guide-side sub-space (11b), wherein a separating wall (25) is arranged between the two sub-spaces (11a; 11b), and the second sub-space (11b) has the connection (27) to the compensation space (19); **characterized in that** the piston rod (5) forms with the separating wall (25) a switching valve (31), and during a piston rod retraction movement, when the piston (5) is situated within the bypass connection region (29), the volume of the retracting piston rod (5), owing to the hydraulic resistance of the base valve (21), is displaced into the first sub-space (11a) and, via the weakly throttling switching valve (31), along the separating wall (25) into the second sub-space (11b), and further flows away via the connection (27) into the compensation space (19), and wherein, when the piston rod (5) retracts beyond the bypass connection region (29) in the direction of the base (13), the damping medium displaced by the piston rod (5) flows via the base valve (21) into the compensation space, on the one hand, and the damping valve (47) in the piston provides for a damping force which is generated by the damping medium which flows from the working space (9) remote from the piston rod into the first sub-space (11a) and further into the second sub-space (11b), on the other hand.

2. Vibration damper according to Claim 1, **characterized in that**, on a length portion (33), the piston rod (5) has a reduction in diameter (35; 45), which forms part of the switching valve (31).

3. Vibration damper according to Claim 1, **characterized in that** the piston rod (5) has an axial duct (39) in connection with a radial duct (41; 43), wherein this duct system forms part of the switching valve (31).

4. Vibration damper according to Claim 1, **characterized in that** the bypass connection region (29) is formed from at least one groove in an inner wall of the working cylinder.

5. Vibration damper according to Claim 1, **characterized in that** the connection opening (27) is equipped with a check valve (75) which opens in the direction of the compensation space (19).

## Revendications

1. Amortisseur de vibrations (1) dont la force d'amortissement dépend de la position de la course, ledit amortisseur de vibrations comprenant un cylindre de travail (3 ; 3a ; 3b) dans lequel une tige de piston (5) est guidée avec un piston (7) de manière mobile axialement, le piston (7) pourvu d'une soupape d'amortissement (47) divisant le cylindre de travail (3) en une chambre de travail (11) située du côté de la tige de piston et une chambre de travail (9) éloignée de la tige de piston, au moins une zone de liaison de dérivation (29) étant prévue entre les deux chambres de travail (9 ; 11), et une soupape de fond (21) étant disposée dans le chemin d'écoulement allant de la chambre de travail (9) éloignée de la tige de piston à une chambre de compensation (19), la chambre de travail (9) éloignée de la tige de piston comportant une liaison de raccordement (27) avec la chambre de compensation (19) qui est commandée en fonction de la position de course de la tige de piston (5), la chambre de travail (11) située du côté de la tige de piston comportant une première partie de chambre (11a) située du côté du piston et une deuxième partie de chambre (11b) du côté de guidage, une paroi de séparation (25) étant disposée entre les deux parties de chambre (11a ; 11b), et la deuxième partie de chambre (11b) comportant la liaison de raccordement (27) à la chambre de compensation (19) ; **caractérisé en ce que** la tige de piston (5) forme avec la paroi de séparation (25) une soupape de commutation (31) et, lors d'un mouvement d'entrée de tige de piston, lorsque le piston (5) se trouve dans la région de liaison de dérivation (29), le volume de la tige de piston entrante (5) est déplacé jusque dans la première partie chambre (11a) en raison de la résistance hydraulique de la soupape de fond (21) et, par le biais de la soupape de commutation à faible étranglement (31), le long de la paroi de séparation (25) jusque dans la deuxième partie chambre (11b) et continue de se déplacer jusque dans la chambre de compensation (19) par le biais de la liaison de raccordement (27), et c'est seulement lorsque la tige de piston (5) va au-delà de la région de liaison de dérivation (29) en direction du fond (13) que d'une part le milieu d'amortissement déplacé par la tige de piston (5) s'écoule jusque dans la chambre de compensation par le biais de la soupape de fond (21) et que d'autre part la soupape d'amortissement (47) située dans le piston fournit une force d'amortissement qui est générée par le milieu d'amortissement qui s'écoule de la chambre de travail (9) éloignée de la tige de piston jusque dans la première partie chambre (11a) puis jusque dans la deuxième partie chambre (11b).

2. Amortisseur de vibrations selon la revendication 1, **caractérisé en ce que** la tige de piston (5) comporte sur une portion de longueur (33) une réduction de diamètre (35 ; 45) qui fait partie de la soupape de commutation (31).

3. Amortisseur de vibrations selon la revendication 1, **caractérisé en ce que** la tige de piston (5) comporte un canal axial (39) en liaison avec un canal radial (41 ; 43), ce système de canaux faisant partie de la soupape de commutation (31).

4. Amortisseur de vibrations selon la revendication 1, **caractérisé en ce que** la zone de raccordement de dérivation (29) est constituée par au moins une rainure ménagée dans une paroi intérieure du cylindre de travail.

5. Amortisseur de vibrations selon la revendication 1, **caractérisé en ce que** l'ouverture de raccordement (27) est équipée d'une soupape anti-retour (75) s'ouvrant en direction de la chambre de compensation (19) .
